# EUROPEAN PATENT SPECIFICATION

(11) **EP 1 544 119 B1**
(45) Date of publication and mention of the grant of the patent: **04.04.2007**
(21) Application number: 04380227.1
(22) Date of filing: 16.11.2004
(51) Int. Cl.: B65D 25/48

(54) **Can with pouring spout and device for its manufacture**
Behälter mit Ausgiesstülle und Vorrichtung zu dessen Herstellung
Bidon avec bec verseur et machine pour sa fabrication

(30) Priority: 18.12.2003 ES 200302993
(43) Date of publication of application: 22.06.2005
(73) Proprietor: KRAFFT, S.L., 20140 Andoain Guipuzcoa (ES)
(72) Inventor: Segurajauregui Mugarza, Rafael, 20230 Legazpi (Gipuzkoa) (ES); Méntrida Pérez, Javier, 20001 San Sebastian (Gipuzkoa) (ES)
(74) Representative: Igartua, Ismael

(56) References cited:
- FR-A- 2 715 125
- GB-A- 727 289
- NL-A- 6 412 002
- US-A- 5 400 928
- US-A- 6 045 013

## Description

### TECHNICAL FIELD

The present invention relates to cans and in particular to plastic cans conformed by blow moulding that comprise a pouring spout.

### PRIOR ART

Plastic cans conformed by blow moulding used for liquids such as engine oil, windscreen cleaner etc. are currently available. Cans of this type having a pouring spout which fits onto the neck of the can to avoid spillage when being emptied are also known.

FR 2715125 A1 discloses a plastic can that provides a housing for the pouring spout in one of its lateral surfaces. The pouring spout is a stand-alone component that fits into the housing. Once the pouring spout has been put into the housing, the housing is covered with an adhesive strip. Therefore, the manufacturing of a can of these characteristic entails conforming the plastic can, conforming the pouring spout separately, fitting each pouring spout into the housing of the corresponding can and fitting the adhesive strip which covers the housing.

The can user has to release said strip and remove the pouring spout from the housing in order to fit it to the neck of the can to enable its use. After use, the pouring spout can be returned to its housing.

### DISCLOSURE OF THE INVENTION

An object of the invention is to provide a plastic can with a pouring spout.

The plastic can of the invention comprises a body conformed by blow moulding which has a neck for filling and emptying liquid, and a pouring spout which can be fitted onto said neck to avoid spillage during emptying, and the body of the can and the pouring spout are conformed as one piece, being joined by an intermediate element.

Therefore, the body and the pouring spout are manufactured in the same process, with the ensuing savings, in time, labour and costs. It is not necessary to use an additional process for manufacturing the pouring spout, and it is not necessary to house it in the body of the can and to cover the housing.

The pouring spout and the intermediate element can be detached from the body of the can to fit the pouring spout to the neck of the can. The can of the invention comprises means for said pouring spout and said intermediate element to remain attached to the body of the can once used.

Another object of the invention is to provide a blow moulding device for the manufacturing of the can of the invention. The device comprises at least one blow mould made up of semi-moulds that when come together form a central cavity, means for housing the plastic parison in the interior of said central cavity and air blowing means so that the parison can be progressively inflated until it completely fits the shape of the interior of the said central cavity. The blow mould comprises semi-moulds that when fitted together form a central cavity engraved with the shape of can body, the pouring spout and the intermediate element.

The device of the invention enables a single manufacturing process for the body of the can and the pouring spout thus giving rise to the already cited advantages.

These and other advantages and features of the invention will be made evident in the light of the drawings and the detailed description thereof.

### DESCRIPTION OF THE DRAWINGS

Figure 1 shows an embodiment of the can of the invention as it is when conformed.
Figure 2 shows the intermediate element of the embodiment of figure 1.
Figure 3 shows the embodiment of figure 1 with the pouring spout folded down to one side of the body of the can.
Figure 4 shows the embodiment of figure 1 with the pouring spout fitted to the neck of the body of the can.
Figure 5 shows the embodiment of figure 1 with the pouring spout attached to the body of the can, after said pouring spout having been removed from the body of the can.
Figure 6 shows the cans according to the embodiment of figure 1 in stacking formation.
Figure 7 shows a front view of a first embodiment of the semi-mould of the blow moulding device of the invention.
Figure 8 shows a perspective view of the semi-mould of figure 7.
Figure 9 shows a front view of a second embodiment of the semi-mould of the blow moulding device of the invention.
Figure 10 shows a perspective view of the semi-mould of figure 9.

### DETAILED DESCRIPTION OF THE INVENTION

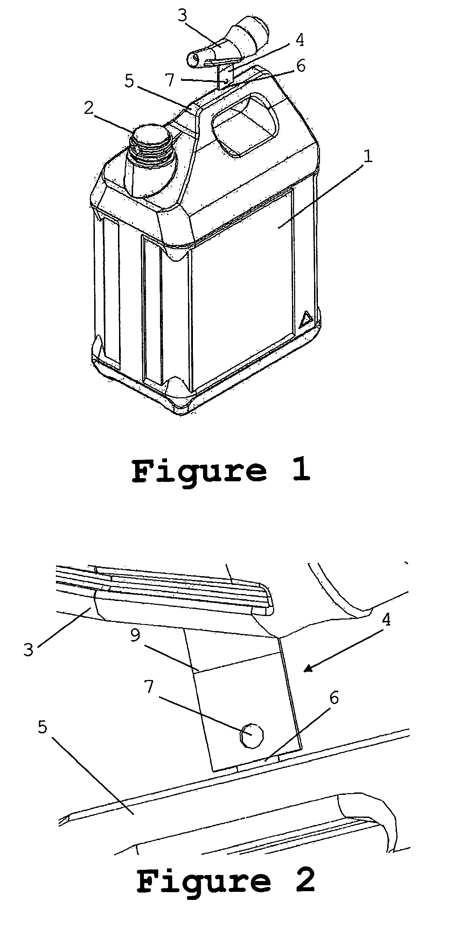

As shown in the embodiment of the invention of figure 1, the can of the invention comprises a body 1, conformed by blow moulding, comprising a neck 2 for filling and emptying liquid, and a pouring spout 3 that can be fitted to said mouth 2 to avoid liquid spillage when the can is being emptied. The body 1 of the can and the pouring spout 3 are moulded as one piece, being joined by intermediate element 4.

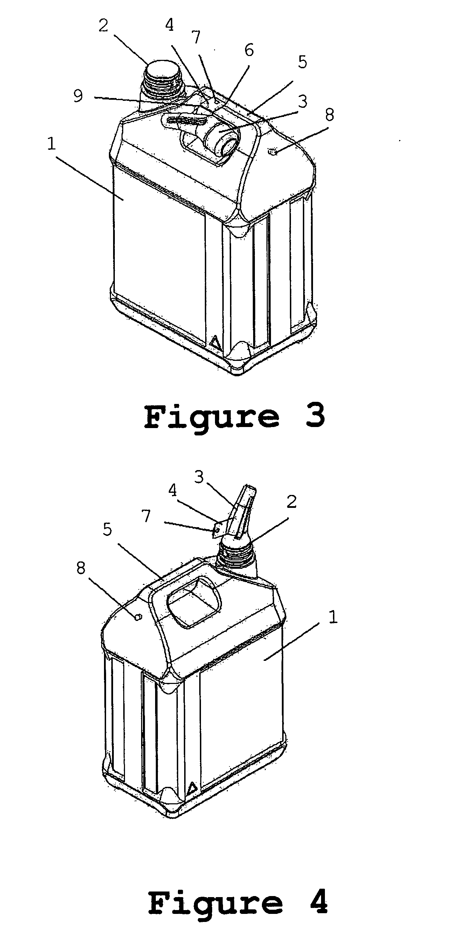

Intermediate element 4, shown in detail in figure 2, is a strip comprising, at the end joined to the body 1, a part 6 thinner than the rest of the intermediate element 4. Said part 6 enables the intermediate element 4 and the pouring spout 3 to be folded down towards one of the sides of the body 1, as is shown in figure 3.

The intermediate element 4 also comprises a second part 9, thinner than the rest of the intermediate element 4, so that the second part 9 folds towards the body 1 of the can when the intermediate element 4 and the pouring spout 3 are folded down towards one of the sides of said body 1.

The can will reach the final user with the intermediate element 4 and the pouring spout 3 folded down towards one side of the body of the can, i.e. the position shown in figure 3.

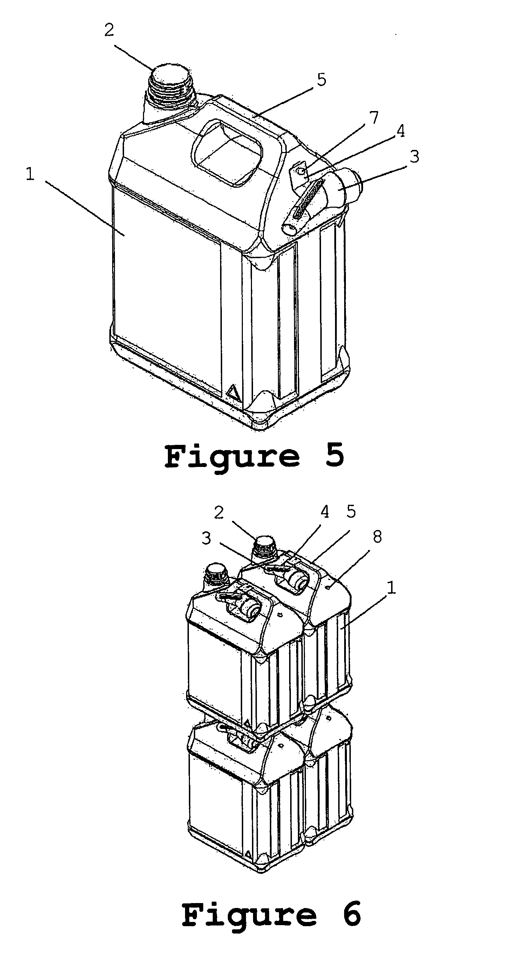

In the embodiment of the can shown in figures 1 to 6, the body 1 of the can comprises a handle 5 on the top part, the intermediate element 4 being joined to the top part of said handle 5. Due to the substantially triangular shape of the top part of the body 1, i.e. the part that comprises the handle 5, with the intermediate element 4 and the pouring spout 3 folded down to one side of the handle 5, the cans can be stacked without difficulty as shown in figure 6.

By snapping off part 6 from the intermediate element 4, the user can separate the intermediate element 4 and the pouring spout 3 from the body 1 of the can in order to fit the pouring spout 3 to the neck 2 of the can, as can be seen in figure 4.

The intermediate element 4 comprises a hole 7 and the body 1 of the can comprises a protrusion 8. This is so that, when the user employs the pouring spout 3, the intermediate element 4 and the pouring spout 3 can be left attached to the body 1 of the can, hanging intermediate element 4 on the protrusion 8 of the body 1 in such a way that said protrusion 8 is inserted into hole 7 of the intermediate element 4.

The protrusion 8 is located at the back end of the handle 5. In this way, the pouring spout 3 is placed in the position shown in figure 5. In said position the pouring spout 3 does not hinder the transport or the storage of the can.

The blow moulding device of the invention, for the manufacturing of the said cans, comprises at least one blow mould made up of semi-moulds that when fitted together form a central cavity, means for housing the parison in the interior of said cavity and air blowing means so that the parison can be progressively inflated until it completely fits the shape of the interior of said central cavity. All these means are well known in the state of the art.

The blow moulding device of the invention comprises semi-moulds 10 that when fitted together form a central cavity engraved with the shape of the body 1 of the can, the pouring spout 3 and the intermediate element 4.

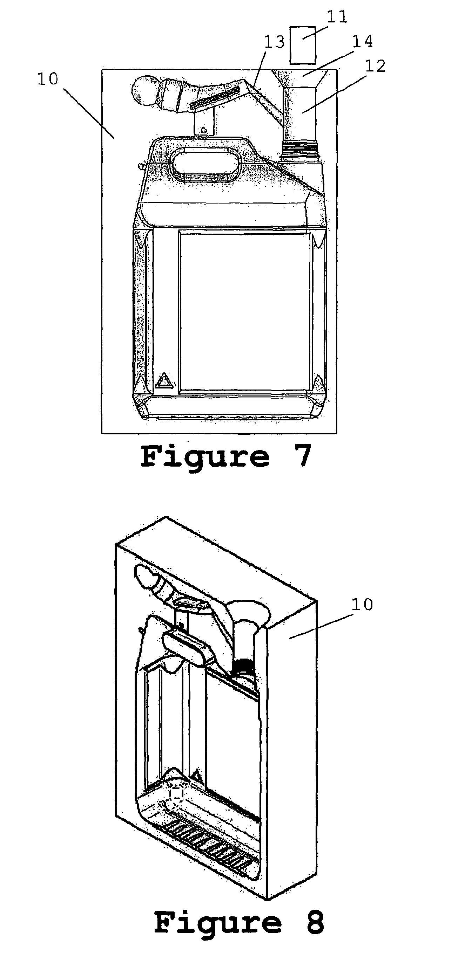

In a first embodiment, shown in figures 7 and 8, the air blowing means of the device of the invention comprise a blowing nozzle 11. The central cavity formed by the semi-moulds 10 comprises an inlet nozzle 14 for the blowing nozzle 11, a substantially vertical duct 12 which communicates the inlet nozzle 14 with the neck 2 of the body 1 of the can, and a secondary duct 13 which communicates the main duct 12 with the pouring spout 3.

Once the can is moulded, the surplus material, that is, the material which corresponds to the main duct 12 and the secondary duct 13, needs to be removed. Once the surplus material is removed, a can as the one shown in figure 1 is obtained.

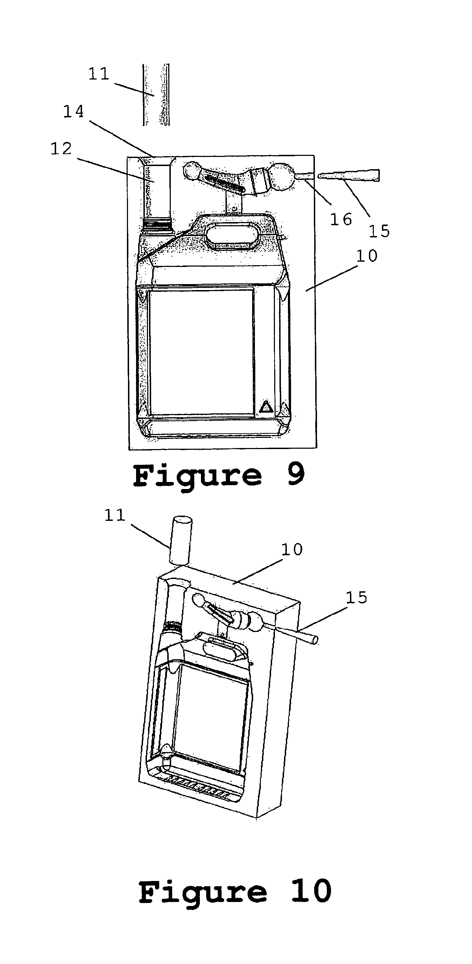

In a second embodiment, shown in figures 9 and 10, the air blowing means of the device of the invention comprise a blowing nozzle 11 and a blowing needle 15. The central cavity which is formed by the semi-moulds 10 comprises an inlet nozzle 14 for the blowing nozzle 11 and a substantially vertical duct 12 which communicates the inlet nozzle 14 with the neck 2 of the body 1 of the can. The blowing needle 15 blows air into the pouring spout 3 through an additional duct 16 of the central cavity formed by the semi-moulds 10.

As in the first embodiment, in this second embodiment surplus material must also be removed once the can has been moulded. In this case the material to be removed corresponds to the substantially vertical duct 12 and the additional duct 16.

## Claims

1. Plastic can that comprises a body (1) conformed by blow moulding with a neck (2) for filling and emptying liquid, and a pouring spout (3) that can be fitted to the neck (2) so as to avoid spillage of the liquid when emptying the can, **characterised in that** the body (1) of the can and the pouring spout (3) are separable elements which are moulded in one piece and joined before use by an intermediate element(4).

2. Plastic can according to claim 1, **characterised in that** the intermediate element (4) is a strip that comprises, at the end joined to the body (1), a part (6) thinner than the rest of the intermediate element (4), so that said part (6) can act as a hinge to fold down the intermediate element (4) and the pouring spout (3) to one side of the body (1), and so that the intermediate element (4) and the pouring spout (3) can be separated from the body (1) of the can to fit the pouring spout (3) onto the neck (2) of the can by snapping off said part (6) .

3. Plastic can according to claim 2, **characterised in that** the intermediate element (4) also comprises a second part(9) thinner than the rest of the intermediate element (4), so that said second part(9) can be bent down towards the body (1) of the can when the intermediate element (4) and the pouring spout (3) are folded down to one of the sides of said body (1).

4. Plastic can according to claims 2 or 3, **characterised in that** the intermediate element (4) also comprises a hole (7) and the body (1) of the can also comprises a protrusion (8), enabling the pouring spout (3) and the intermediate element (4) to remain attached to the body (1) of the can, once separated from the said body (1), by the insertion of the protrusion (8) into the hole (7) of the intermediate element (4).

5. Plastic can according to claim 4, **characterised in that** the body (1) of the can comprises a handle (5) in its top part, the intermediate element (4) being joined to the top part of said handle(5).

6. Plastic can according to claim 5, **characterised in that** the protrusion (8) is placed at the back end of the handle (5).

7. Blow moulding device for the manufacturing of the can according to any of the claims 1 to 8, which comprises at least one blow mould formed by semi-moulds which when fitted together form a central cavity, means for housing a plastic parison in the interior of the said central cavity, and air blowing means for making the parison progressively inflate until it completely adapts to the shape of said central cavity, **characterised in that** the blow mould is formed by semi-moulds (10) which when fitted together form a central cavity engraved with the shape of the body (1) of the can, the pouring spout (3) and the intermediate element (4).

8. Blow moulding device according to claim 7, **characterised in that** the air blowing means comprise only one blowing nozzle (11).

9. Blow moulding device according to claim 8, **characterised in that** the central cavity which is formed by the semi-moulds (10) comprises an inlet nozzle (14) for the blowing nozzle (11), a substantially vertical duct (12) which communicates the inlet nozzle (14) with the neck (2) of the body (1) of the can, and a secondary duct (13) which communicates the main duct (12) with the pouring spout (3).

10. Blow moulding device according to claim 7, **characterised in that** the air blowing means comprise a blowing nozzle (11), the central cavity formed by the semi-moulds (10) comprising an inlet nozzle (14) for said blowing nozzle (11) and a substantially vertical main duct (12) which communicates the inlet nozzle (14) with the neck (2) of the body (1) of the can, and said air blowing means also comprise a blowing needle (15) for blowing air into the pouring spout (3) through an additional duct (16) of the central cavity formed by the semi-moulds (10).

## Patentansprüche

1. Plastikkanister, umfassend einen Körper (1), gefertigt mittels Extrusions-Blasverfahren, mit einem Hals (2) zum Befüllen und Entleeren von Flüssigkeit und einem Auslaufstutzen (3), der auf den Hals (2) gesetzt werden kann, um das Verschütten der Flüssigkeit beim Entleeren des Kanisters zu verhindern, **dadurch gekennzeichnet, dass** der Körper (1) des Kanisters und der Auslaufstutzen (3) abnehmbare Elemente sind, die in einem Stück geformt werden und vor dem Einsatz durch ein Zwischenstück (4) verbunden werden.

2. Plastikkanister nach Anspruch 1, **dadurch gekennzeichnet, dass** das Zwischenstück (4) ein Streifen ist, der an dem mit dem Körper (1) verbundenen Ende einen dünneren Teil (6) als den Rest des Zwischenstücks (4) umfasst, so dass dieser Teil (6) wie eine Angel wirken kann, um das Zwischenstück (4) und den Auslaufstutzen (3) an einer Seite des Körpers (1) nach unten zu klappen, so dass das Zwischenstück (4) und der Auslaufstutzen (3) vom Körper (1) des Kanisters getrennt werden können, um den Auslaufstutzen (3) auf den Hals (2) des Kanisters zu setzen, indem dieser Teil (6) ausgerastet wird.

3. Plastikkanister nach Anspruch 2, **dadurch gekennzeichnet, dass** das Zwischenstück (4) daneben einen zweiten dünneren Teil (9) als den Rest des Zwischenstücks (4) umfasst, so dass dieser zweite Teil (9) nach unten zum Körper (1) des Kanisters gebogen werden kann, wenn das Zwischenstück (4) und der Auslaufstutzen (3) an einer der Seiten des Körpers (1) nach unten geklappt sind.

4. Plastikkanister nach Anspruch 2 oder 3, **dadurch gekennzeichnet, dass** das Zwischenstück (4) daneben ein Loch (7) und der Körper (1) des Kanisters daneben einen Vorsprung (8) umfasst, so dass der Auslaufstutzen (3) und das Zwischenstück (4) am Körper (1) des Kanisters befestigt bleiben können, sobald sie vom Körper (1) abgetrennt wurden, indem der Vorsprung (8) in das Loch (7) des Zwischenstücks (4) eingeführt wird.

5. Plastikkanister nach Anspruch 4, **dadurch gekennzeichnet, dass** der Körper (1) des Kanisters oben einen Griff (5) umfasst, wobei das Zwischenstück (4) mit dem oberen Teil des Griffs (5) verbunden wird.

6. Plastikkanister nach Anspruch 5, **dadurch gekennzeichnet, dass** der Vorsprung (8) am hinteren Ende des Griffs (5) angebracht ist.

7. Extrusions-Blasgerät zur Herstellung des Kanisters nach einem der Ansprüche 1 bis 8, das zumindest eine aus zwei Formhälften bestehende Extrusionsblasform umfasst, die, wenn sie zusammengesetzt sind, einen zentralen Hohlbereich bilden, eine Vorrichtung zur Unterbringung eines Plastikschlauchvorformlings im Inneren des zentralen Hohlbereichs und eine Vorrichtung zum Blasen von Luft, um zu erreichen, dass sich der Plastikschlauchvorformling schrittweise aufbläst, bis er vollkommen die Form des zentralen Hohlbereichs angenommen hat, **dadurch gekennzeichnet, dass** die Extrusionsblasform aus zwei Formhälften (10) besteht, die, wenn sie zusammengesetzt sind, einen zentralen Hohlbereich in der Form des Körpers (1) des Kanisters, des Auslaufstutzens (3) und des Zwischenstücks (4) bilden.

8. Extrusions-Blasgerät nach Anspruch 7, **dadurch gekennzeichnet, dass** die Luftblasvorrichtung nur eine Blasedüse (11) umfasst.

9. Extrusions-Blasgerät nach Anspruch 8, **dadurch gekennzeichnet, dass** der von den beiden Formhälften (10) gebildete zentrale Hohlbereich eine Einlassdüse (14) für die Blasedüse (11), eine im Wesentlichen vertikale Leitung (12), mit der die Einlassdüse (14) mit dem Hals (2) des Körpers (1) des Kanisters verbunden ist, und eine zweite Leitung (13), mit der die Hauptleitung (12) mit dem Auslaufstutzen (3) verbunden ist, umfasst.

10. Extrusions-Blasgerät nach Anspruch 7, **dadurch gekennzeichnet, dass** die Luftblasvorrichtung eine Blasedüse (11) umfasst, wobei der von den Formhälften (10) gebildete zentrale Hohlbereich eine Einlassdüse (14) für die Blasedüse (11) und eine im Wesentlichen vertikale Hauptleitung (12) umfasst, mit der die Einlassdüse (14) mit dem Hals (2) des Körpers (1) des Kanisters verbunden ist, und die Luftblasvorrichtung daneben eine Blasnadel (15) zum Einblasen der Luft in den Auslaufstutzen (3) durch eine zusätzliche Leitung (16) des von den Formhälften (10) gebildeten zentralen Hohlbereichs umfasst.

## Revendications

1. Une canette en plastique comprenant un corps (1) mis en conformité par un dispositif de moulage par soufflage, munie d'un goulot (2) pour le remplissage et le vidage de liquide et d'un bec verseur (3) qui peut être fixé sur le goulot (2) de manière à éviter le déversement accidentel du liquide lors du vidage de la canette, **caractérisée en ce que** le corps (1) de la canette et le bec verseur (3) sont des éléments séparables qui sont moulés pour former une seule pièce et reliés avant usage par un élément intermédiaire (4).

2. Une canette en plastique selon la revendication 1, **caractérisée en ce que** l'élément intermédiaire (4) est une bande qui comprend, à l'extrémité reliée au corps (1), une pièce (6) plus fine que le reste de l'élément intermédiaire (4), de telle manière que ladite pièce (6) puisse faire office de charnière pour plier l'élément intermédiaire (4) et le bec verseur (3) sur un côté du corps (1) et afin que l'élément intermédiaire (4) et le bec verseur (3) puissent être séparés du corps (1) de la canette pour fixer le bec verseur (3) sur le goulot (2) de la canette en cassant net ladite pièce (6).

3. Une canette en plastique selon la revendication 2, **caractérisée en ce que** l'élément intermédiaire (4) comprend également une seconde pièce (9) plus fine que le reste de l'élément intermédiaire (4), afin que ladite seconde pièce (9) puisse être repliée vers le corps (1) de la canette lorsque l'élément intermédiaire (4) et le bec verseur (3) sont pliés sur l'un des côtés dudit corps (1) .

4. Une canette en plastique selon les revendications 2 ou 3, **caractérisée en ce que** l'élément intermédiaire (4) comprend également un trou (7) et le corps (1) de la canette comprend également une protubérance (8) permettant au bec verseur (3) et à l'élément intermédiaire (4) de rester fixés sur le corps (1) de la canette, une fois séparés dudit corps (1), par l'insertion de la protubérance (8) dans le trou (7) de l'élément intermédiaire (4).

5. Une canette en plastique selon la revendication 4, **caractérisée en ce que** la partie supérieure du corps (1) de la canette est munie d'une manette (5), l'élément intermédiaire (4) étant relié à la partie supérieure de ladite manette (5).

6. Une canette en plastique selon la revendication 5, **caractérisée en ce que** la protubérance (8) se trouve à l'extrémité arrière de la manette (5).

7. Un dispositif de moulage par soufflage destiné à la fabrication de la canette selon l'une quelconque des revendications 1 à 8, qui comprend au moins un moule pour soufflage formé de demi-moules qui, lorsque encastrés les uns dans les autres, forment une cavité centrale, destinée à abriter une paraison en plastique, un dispositif de soufflage destiné à gonfler progressivement la paraison jusqu'à ce qu'elle s'adapte complètement à la forme de ladite cavité centrale, **caractérisé en ce que** le moule pour soufflage est formé de demi-moules (10) qui, lorsque encastrés les uns dans les autres, forment une cavité centrale sur laquelle sont gravés la forme du corps (1) de la canette, le bec verseur (3) et l'élément intermédiaire (4).

8. Un dispositif de moulage par soufflage selon la revendication 7, **caractérisé en ce que** le dispositif de soufflage comprend uniquement une buse soufflante (11).

9. Un dispositif de moulage par soufflage selon la revendication 8, **caractérisé en ce que** la cavité centrale formée par les demi-moules (10), comprend une buse d'entrée (14) pour la buse soufflante (11), un conduit en grande partie vertical (12) qui relie la buse d'entrée (14) au goulot (2) du corps (1) de la canette et un second conduit (13) qui relie le conduit principal (12) au bec verseur (3).

10. Un dispositif de moulage par soufflage selon la revendication 7, **caractérisé en ce que** le dispositif de soufflage comprend une buse soufflante (11), la cavité centrale formée par les demi-moules (10) comprenant une buse d'entrée (14) pour ladite buse soufflante (11) et un conduit en grande partie vertical (12) qui relie la buse d'entrée (14) au goulot (2) du corps (1) de la canette. Ledit système de soufflage comprend également une aiguille de soufflage (15) pour souffler de l'air dans le bec verseur (3) au travers d'un conduit supplémentaire (16) de la cavité centrale formée par les demi-moules (10).
